# EUROPÄISCHE PATENTSCHRIFT

(11) **EP 2 881 218 B1**
(45) Veröffentlichungstag und Bekanntmachung des Hinweises auf die Patenterteilung: **24.04.2019**
(21) Anmeldenummer: 14196419.7
(22) Anmeldetag: 04.12.2014
(51) Int. Cl.: B23Q 1/76

(54) **Lünette zur Abstützung eines Werkstücks**
Rest for supporting a workpiece
Lunette destinée au soutien d'une pièce usinée

(30) Priorität: 04.12.2013 AT 508002013
(43) Veröffentlichungstag der Anmeldung: 10.06.2015
(73) Patentinhaber: WFL Millturn Technologies GmbH & Co. KG, 4030 Linz (AT)
(72) Erfinder: MARINGER, Herbert, 4642 Sattledt (AT)
(74) Vertreter: Jell, Friedrich

(56) Entgegenhaltungen:
- DE-A1- 2 141 701
- DE-A1- 2 311 254
- DE-A1- 2 547 615

## Beschreibung

Die Erfindung betrifft eine Lünette zur Abstützung eines Werkstücks einer Werkzeugmaschine mit einem Lünettenträger nach dem Oberbegriff des Anspruchs 1 (siehe z.B. DE2141701).

Bei Lünetten zur Abstützung von Werkstücken ist es bekannt (DE2311254A), mit hydraulischen Stellgliedern die Stützglieder der Lünette relativ zum Werkstück zu verlagern. Die als Pinolen ausgeführten Stützglieder sind zueinander winkelversetzt am Lünettenträger der Lünette befestigt, welche eine geschlossene Form aufweist. Zur Aufnahme des Werkstücks ist der Oberteil der Lünette bzw. des Lünettenträgers aufschwenkbar am Unterteil der Lünette befestigt. Die Verwendung von hydraulischen Stellgliedern kann im Allgemeinen für eine kompakte Bauform der Lünette genützt werden, weil sich damit im Vergleich mit mechanisch zu betätigbaren Stellgliedern die Anzahl an Bauteilen an der Lünette reduziert. Nachteilig weisen hydraulische Stellglieder im Vergleich zu mechanischen Stellgliedern mit gleicher Baugröße einen verminderten Stellweg auf, was die Flexibilität der Lünette zur Abstützung verschiedenster Werkstücke reduziert. Zudem sind derartige Lünetten vergleichsweise unflexibel hinsichtlich einer Anpassung der Wirkrichtung der Stützglieder auf das einzuspannende Werkstück.

Die Erfindung hat sich daher ausgehend vom Eingangs geschilderten Stand der Technik die Aufgabe gestellt, eine Lünette der eingangs geschilderten Art derart konstruktiv zu verbessern, dass trotz kleiner Baugrößen eine hohe Flexibilität in der Abstützung verschiedenster Werkstücke möglich ist. Zudem soll die Lünette konstruktiv einfach sein.

Die Erfindung löst die gestellte Aufgabe mit einer Lünette nach Anspruch 1.

Weist die Lünette eine Kupplung und eine Baugruppe mit dem ersten Stützglied und mit dem damit verstellbaren hydraulischen Stellglied auf, kann durch geeignete Ausstattung der Lünette äußerst flexibel auf unterschiedlichste Anforderungen hinsichtlich des Werkstücks, dessen Durchmessers und/oder der Wirkrichtungen der Stützglieder auf das Werkstück reagiert werden. Über die kuppelbare Baugruppe kann nämlich wahlweise jenes Stützglied bzw. jenes hydraulische Stellglied am Lünettenträger vorgesehen werden, mit dem der werkstückspezifische Stellweg und/oder die gewünschte Einspannung erreicht, dennoch aber eine vorgeschriebene Baugröße der Lünette nicht überschritten wird. Damit kann auch im Gegensatz zum Stand der Technik ein Optimum bei an und für sich gegenläufigen Parametern der Lünette, nämlich Stellweg, Art der Einspannung, Niederzug, etc. in Relation zur Baugröße, gefunden werden. Zudem erfordert die erfindungsgemäße kraft- und/oder formschlüssige Kupplung, beispielsweise ausgeführt als Flanschkupplung, keine besonderen konstruktiven Maßnahmen am Lünettenträger, wodurch die konstruktive Einfachheit der Lünette gewahrt bleiben kann.

Die Genauigkeit der Abstützung des Werkstücks an der Lünette wird dadurch erhöht, dass die Wirkrichtung des ersten Stützglieds mit hydraulisch betätigbarem Stellglied einer Wirkrichtung durch ein anderes Stützglied oder mehrere andere Stützglieder mit ausschließlich mechanisch und/oder elektrisch betätigbarem Stellglied oder Stellgliedern entgegengesetzt ist. Unter Ausnützung der vergleichsweise hohen mechanischen Steifigkeit der anderen Stützglieder, die keine hydraulischen Stellglieder aufweisen, kann nämlich das dazu meist weichere hydraulische Stützglied verspannt werden. Trotz einer gewissen Kompressibilität der Hydraulikflüssigkeit kann damit dennoch eine starre Abstützung des Werkstücks an der Lünette sichergestellt werden.

Weist die Lünette einen am Maschinenbett der Werkzeugmaschine verfahrbaren Schlitten auf, an dem der Lünettenträger befestigt ist, kann dies die Handhabung der Kupplung an der Lünette erleichtern.

Die Lünette kann einer besonders schlanken Bauform folgen, wenn sich die Baugruppe auf der dem Maschinenbett zugewandten Seite der Lünette befindet. Die von hydraulischen Stellgliedern bekannte geringe Baugröße kann nämlich gerade in diesem Bereich des Lünettenträgers eine vergleichsweise geringe Trägerbreite ermöglichen und damit trotz der durch das nahe Maschinenbett beengten Bauverhältnissen eine vergleichsweise große Lünettenaufnahme ermöglichen.

Das Werkstück kann in bekannter Weise besonders abgestützt werden, wenn das Stützelement je eine Rolle oder Schale aufweist.

Kostengünstig kann das hydraulische Stellglied ausgeführt werden, in dem ein Hydraulikzylinder das hydraulische Stellglied ausbildet.

Ist das erste Stützglied als Pinole ausgeführt, die in einem Zylinderelement des Hydraulikzylinders endet, können durch weitere konstruktive Vereinfachungen die Kosten noch weiter verringert werden.

Die Baugröße der Lünette kann zudem weiter verringert werden, wenn das erste Stützglied einen zweiseitigen Hebel aufweist, dessen erster Hebelarm mit dem hydraulischen Stellglied verbunden ist. Zudem kann durch die Kraftumlenkung des Hebels ein vergleichsweise breites hydraulisches Stützglied verwendet werden, um eine hohe Krafterzeugung am Stürzelement zu bewirken. Beispielsweise kann hierfür ein vergleichsweise großer Zylinderdurchmesser am Hydraulikzylinder oder breite Druckdosen dienen. Außerdem kann eine Hebelausführung zur Kraftverstärkung in Wirkrichtung des Stützglieds genützt werden. Diese so ausgebildete Abstützung kann selbst vergleichsweise große Zerspanungskräfte verbessert aufnehmen, wie diese beispielsweise bei schwerem Schruppfräsen auftreten können. Zudem kann mithilfe eines Hebels konstruktiv einfach auch die Umschließung der Einspannung des Werkstücks in der Lünette auf über 180 Grad erhöht werden.

Ist der Hebel als Winkelhebel ausgeführt, kann dies die Baugröße der Baugruppe bzw. der Lünette weiter verringern.

Das Stützelement kann an der Baugruppe auswechselbar festgehalten werden, in dem dieses mit dem zweiten Hebelarm des Hebels über eine lösbare kraft- und/oder formschlüssige Verbindung fest verbunden ist. Damit kann unter anderem die Flexibilität der Lünette weiter erhöht werden.

Weist die Baugruppe eine Klemmeinrichtung zur Fixierung der relativen Verstelllage deren Stützglieds zum Werkstuck auf, kann die Steifigkeit der Abstützung zusätzlich erhöht werden. Zudem kann eine eventuelle Verspannung des hydraulischen Stellglieds zum Ausgleich einer Kompressibilität der Hydraulikflüssigkeit fixiert werden.

Ist die Kupplung gegenüber dem Stützelement eines zweiten seitlichen Stützgliedes niedriger angeordnet, das dem hydraulischen Stützglied gegenüberliegt, kann eine vergrößerte Kupplungsfläche ermöglicht und damit die Lünette standfester ausgestaltet werden.

Vereinfache Beladungsverhältnisse beim Vorsehen des Werkstücks an der Lünette können sich ergeben, wenn am Lünettenträger zwei das Werkstück seitlich abstützende Stützglieder, die sich gegenüberliegen, und ein das Werkstück unten abstützendes Stützglied befestigt sind.

In der Figur ist beispielsweise der Erfindungsgegenstand anhand mehrerer Ausführungsbeispiele dargestellt. Es zeigen
- Fig. 1: eine aufgerissene Seitenansicht auf eine Lünette nach einem ersten Ausführungsbeispiel,
- Fig. 2: eine Detailansicht der Fig. 1,
- Fig. 3: eine aufgerissene Seitenansicht auf weitere Lünette nach einem zweiten Ausführungsbeispiel und
- Fig. 4: eine Detailansicht der Fig. 3.

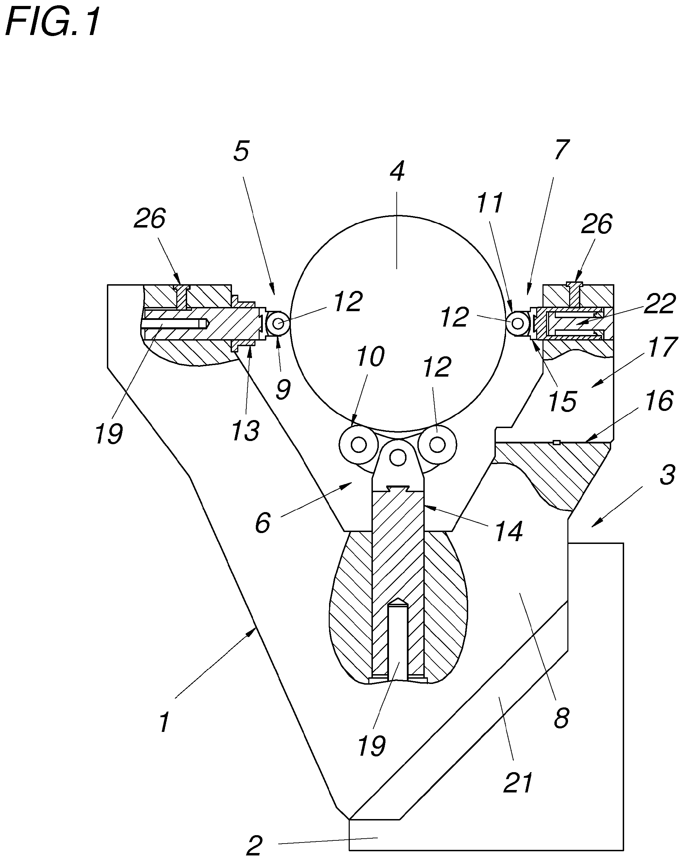

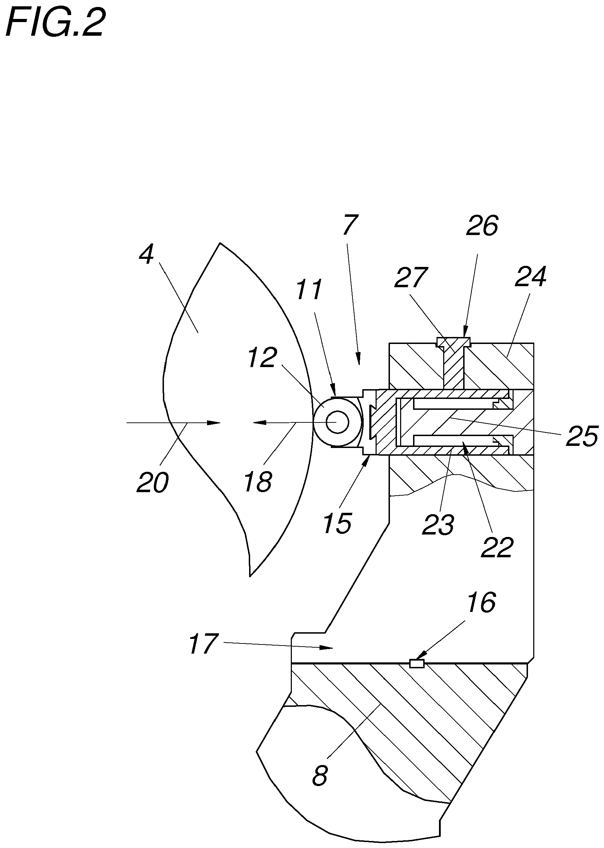

Gemäß den Figuren 1 und 2 ist eine Lünette 1 beispielsweise dargestellt, die an einem Maschinenbett 2 einer nicht näher dargestellten Werkzeugmaschine 3 gelagert ist und ein eingespanntes Werkstück 4 abstützt. Hierzu sind an der Lünette 1 mehrere Stützglieder 5, 6, 7 vorgesehen, die sich am Lünettenträger 8 befestigt sind und in zueinander winkelversetzt angeordneten Stützelementen 9, 10, 11 zum Werkstück 4 hin enden. Diese Stützelemente 9, 10, 11 sind als Rollen 12 ausgeführt. Den Stützgliedern 5, 6, 7 sind zudem Stellglieder 13, 14, 15 zugeordnet, über die die Stützglieder 5, 6, 7 jeweils relativ zum Werkstück 4 verstellbar am Lünettenträger gelagert sind. Über diese Stellglieder 13, 14, 15 kann beispielsweise ein Durchhang eines in der Werkzeugmaschine 3 eingespannten Werkstücks 4 korrigiert werden. Das erste dieser Stellglieder 13, 14, 15 ist als hydraulisches Stellglied 15 bzw. als hydraulischer Aktor ausgeführt. Mit einem Zu- oder Abführen von Hydraulikflüssigkeit wird dessen wirkverbundenes Stützglied 7 bewegt, das das Werkstück 4 seitlich an der Lünette 1 abstützt.

Um unterschiedlichste Werkstücke 4 von einer Lünette 1 abstützen zu können, wird die Lünette 1 erfindungsgemäß mit einer lösbaren Verbindung bzw. Kupplung 16, nämlich einer verschraubten Flanschkupplung, versehen. Die Kupplung 16 kann im Allgemeinen auch als Schnellkupplung ausgeführt sein bzw. ist jegliche andere lösbare Kupplung vorstellbar, beispielsweise kraft- und/oder formschlüssige Kupplungen, was nicht näher dargestellt worden ist. Diese Kupplung 16 kann im Allgemeinen neben seiner mechanischen Kraft- bzw. Momentenkupplung auch Medienkupplungen, um damit beispielsweise das hydraulische Stellglied 7 mit Flüssigkeit zu versorgen, und/oder auch elektrische Kupplungen zum Anschließen von Sensoren etc. aufweisen, was nicht näher dargestellt worden ist.

Da sowohl das Stützglied 7 mit dessen Stützelement 11 als auch das diesbezügliche hydraulische Stellglied 15 zu einer Baugruppe 17 zusammengefasst sind und diese Kupplung 16 auch zwischen dem Lünettenträger 8 und diese Baugruppe 17 vorgesehen ist, kann bei Bedarf diese seitliche Abstützung ausgetauscht werden. Bedarfsgerechte Stellwege am seitlichen Stützelement 11 sind so zu verwirklichen. Die Vorteile der Kupplung 16 gehen jedoch auch dahin gehend, dass damit auch die Art der Einspannung verändert werden kann.

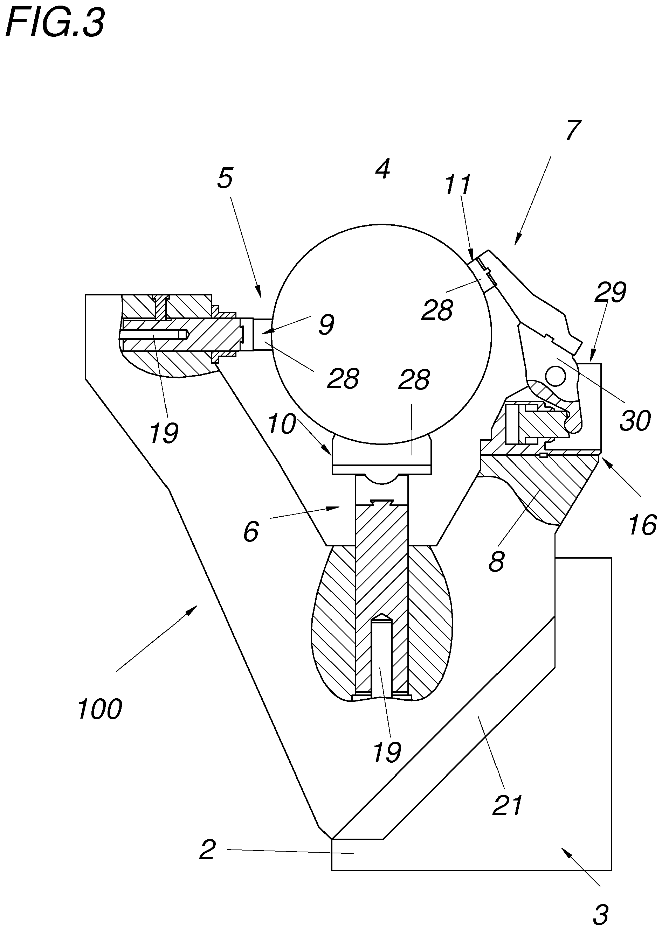

Es kann nämlich von einer Pinolenausführung des Stützglieds 7 nach Fig. 1 auf eine Hebelausführung des Stützglieds 7 nach Fig. 3 umgerüstet werden. Diese Einspannung garantiert eine vergrößerte Umschließung des Werkstücks 4 mit einem erhöhten Niederzug am Werkstück 4. Zudem zeigt diese Baugruppe 17 eine vergleichsweise geringe Baugröße, trotz eines vergleichsweise großen Zylinderdurchmessers am hydraulischen Stellglied 15, um hohe Stellkräfte erzeugen zu können. Diese kompakte Baugruppe 17 vergrößert daher auch die Breite der Lünette 1 nicht, wodurch auch keine Nachteile im Arbeitsraum der Werkzeugmaschine 3 entstehen.

Die Wirkrichtung 18 des Stützglieds 7 mit hydraulisch betätigbarem Stellglied 15 ist horizontal ausgerichtet, wie dies in den Figuren 1 und 2 erkannt werden kann. Um eine wenngleich eventuell auch geringe Kompressibilität der Hydraulikflüssigkeit des Stellglieds 15 zu kompensieren, ist das dem hydraulisch betätigbaren Stellglied 15 diametral gegenüberliegende Stützglied 5 mechanisch linear verstellbar ausgeführt. Zu diesem Zweck ist diesem Stützglied 5 eine Spindel 19 zugeordnet, dessen Wirkrichtung 20 entgegen der Wirkrichtung 18 des Stützglieds 7 gerichtet ist. Damit kann die horizontale Abstützung über das Stützglied 5 verspannt und so eine eventuelle Elastizität des Stützglieds 7 ausgeglichen werden. Eine feste bzw. exakte Abstützung des Werkstücks 4 ist damit geschaffen. In diesem Ausführungsbeispiel fallen beide Verstellrichtungen der Stützglieder 5 und 15 zusammen bzw. sind in Flucht. Im Allgemeinen ist jedoch eine zur Wirkrichtung 18 parallele Komponente der Wirkrichtung 20 des Stützglieds 5 als ausreichend denkbar, vorstehende Effekte zu schaffen.

Wie der Fig. 1 insbesondere zu entnehmen, ist die Lünette 1 an einem Schlitten 21 befestigt, nämlich über seinen Lünettenträger 6. Der Schlitten 21 ist über eine nicht näher dargestellte Linearführung am Maschinenbett 2 der Werkzeugmaschine beweglich befestigt. Dies führt mindestens dazu, dass eine Seite des Lünettenträgers 6 dem Maschinenbett 2 nähert, wodurch beengte Bauverhältnisse in der konstruktiven Ausgestaltung der Lünette 1 zu berücksichtigen sind. Gelöst wird dies elegant dadurch, dass sich die Baugruppe 17 der Lünette 1 auf der dem Maschinenbett 2 zugewandten Seite der Lünette 1 befindet, wodurch die Lünette 1 an verschiedenste Maschinenbetten, beispielsweise auch einem Schrägbett, anpassbar ist. Eine vielseitig verwendbare Lünette 1 ist dadurch geschaffen.

Konstruktive Einfachheit wird durch die Ausbildung des hydraulischen Stellglieds 15 durch einen Hydraulikzylinder 22 erreicht, dessen Zylindergehäuse als erstes Zylinderelement 23 gegenüber dem Gehäuse 24 der Baugruppe 17 linear bewegt werden kann. Die Kolbenstange als zweites Zylinderelement 25 ist mit dem Gehäuse 24 der Baugruppe 17 starr verbunden, sodass das Zylindergehäuse aus- und einfahrbar ausgebildet ist. Das Stützglied 15 ist daher in der Art einer Pinole ausgebildet, die zentrisch zur Werkstückmitte linear verstellbar ist und dessen im Zylinderelement 23 des Hydraulikzylinders 22 endet.

Des Weiteren weist die Baugruppe 17 eine lösbare Klemmeinrichtung 26 auf. Diese ist beispielsweise als Schraubklemme ausgebildet, die über seine Schraube 26 auf das Zylindergehäuse des Hydraulikzylinders 22 kraftschlüssig einwirkt. Damit kann die Verstelllage des ersten Stützglieds 7 zum Werkstuck 4 mechanisch fixiert werden, was dessen starre Abstützung gewährleistet.

Im Allgemeinen ist jegliche andere Ausführungsform für die Klemmeinrichtung denkbar, selbst hydraulisch betätigbare Klemmeinrichtungen. Diese Klemmeinrichtungen können beispielsweise Keile, Klemmbacken etc. aufweisen, was nicht näher dargestellt worden ist, um damit die Verstelllage der Stützglieder 5, 6, 7 zu fixieren.

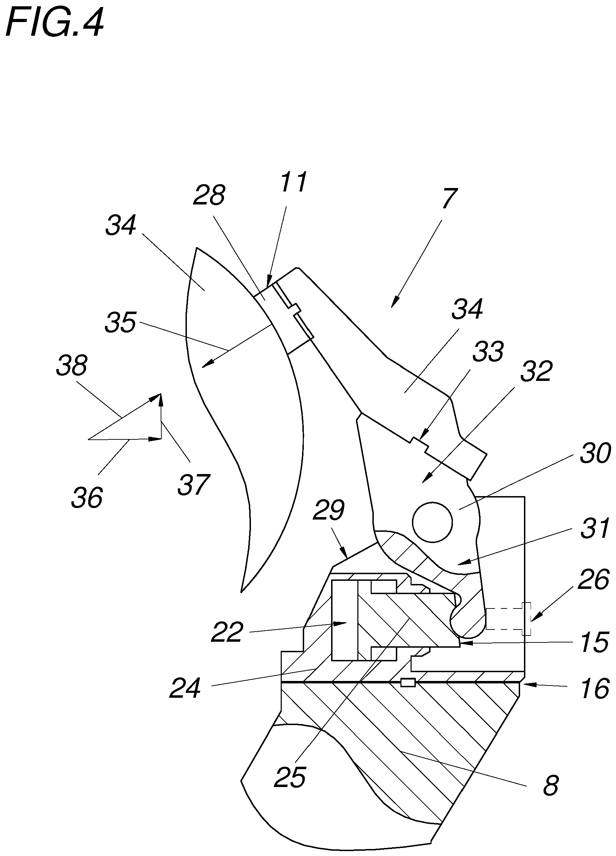

Die nach den Figuren 3 und 4 dargestellte Lünette 100 weist zum Unterschied zur nach den Figuren 1 und 2 dargestellte Lünette 1 zum einen andere Stützelemente 9, 10, 11, nämlich Schalen 28, sowie zum anderen eine andere Baugruppe 29 auf. Diese Baugruppe 29 unterscheidet sich im Wesentlichen von der Baugruppe 17 im ersten Stützglied 7. Dieses Stützglied 7 weist einen zweiseitigen Hebel 30 auf, dessen erster Hebelarm 31 mit dem hydraulischen Stellglied 15, und zwar mit dessen Kolbenelement 25 verbunden ist bzw. damit betätigt wird. Mit dem zweiten Hebelarm 32 ist das Stützelement 11 des Stützglieds 15 verbunden, und zwar über eine lösbare kraft- und formschlüssige Verbindung 33. Damit kann beispielsweise das hier als Schale 28 ausgebildete Stützelement 11 durch eine nicht näher dargestellte Rolle -ähnlich zu Fig 1- ausgetauscht werden kann. Das Stürzelement 11 lagert auf einer Hebelverlängerung 34, die mit dem zweiseitigen Hebel 30 lösbar verbunden ist.

Wie insbesondere der Fig. 4 zu entnehmen, weist das Stützglied 15 keine horizontale Wirkrichtung 35 auf. Die Wirkrichtungen 36, 37 der Stürzglieder 5, 6 führen zusammen zu einer der Wirkrichtung 35 des Stützglieds 15 entgegengesetzt gerichtete Wirkrichtung 38, sodass auch hier die Stützglieder 5, 6 zum Verspannen des Stützglieds 7 verwendet werden und damit die Steifigkeit in der Abstützung des Werkstücks erhöht wird.

Wie nach den Figuren 1 und 3 zu erkennen, weist die Lünette 1, 100 jeweils zwei seitliche Stützglieder 5, 7 auf, die gegenüberliegen, und ein unteres Stützglied 6 auf. Die Kupplung 16 beider Lünetten 1, 100 ist zum Stützelement 9 des seitlichen Stützgliedes 5 niedriger angeordnet. Eine breite Kupplungsfläche am Lünettenträger 8 steht so zur Krafteinleitung vom Stützglied 7 in den Lünettenträger 8 zur Verfügung, was die Lünette 1, 100 trotz Kupplung 16 äußerst steif gegenüber mechanischen Belastungen macht.

Wie außerdem an den Lünetten 1, 100 nach den Figuren 1 und 3 zu erkennen, ist neben dem das Werkstück 4 seitlich abstützenden Stützgliedern 5, 7, die sich gegenüberliegen, ein das Werkstück 4 unten abstützendes Stützglied 6 am Lünettenträger 8 befestigt. Das Werkstück 4 ist so beladungsfreundlich an den Lünetten 1, 100 vorgesehen und damit abgestützt werden.

## Patentansprüche

1. Lünette zur Abstützung eines Werkstücks (4) einer Werkzeugmaschine (3) mit einem Lünettenträger (8) zur vorzugsweisen Montage am Maschinenbett (2) der Werkzeugmaschine (3), mit mindestens einem hydraulischen Stellglied (15) und mit mehreren am Lünettenträger (8) befestigten Stützgliedern (5, 6, 7), die in zueinander winkelversetzt angeordneten Stützelementen (9, 10, 11) zur Anlage an das Werkstück (4) enden und von denen ein erstes das Werkstück (4) seitlich mit seinem Stützelement (11) abstützendes Stützglied (7) mithilfe des hydraulischen Stellglieds (15) relativ zum Werkstück (4) verstellbar am Lünettenträger (8) gelagert ist, wobei die Lünette (1, 100) eine Kupplung (16) und eine Baugruppe (17, 29) mit dem ersten Stützglied (7) und mit dem damit verstellbaren hydraulischen Stellglied (15) aufweist, wobei diese Baugruppe (17, 29) über die Kupplung (16) mit dem Lünettenträger (8) auswechselbar verbunden ist, **dadurch gekennzeichnet, dass** die Wirkrichtung (18, 35) des ersten Stützglieds (7) mit hydraulisch betätigbarem Stellglied (15) einer Wirkrichtung (20, 38) durch ein anderes Stützglied (5, 6) oder mehrere andere Stützglieder (5 und 6) mit ausschließlich mechanisch und/oder elektrisch betätigbaren Stellglied (13, 14) oder Stellgliedern (13 und 14) entgegengesetzt ist.

2. Lünette nach Anspruch 1, **dadurch gekennzeichnet, dass** die Lünette (1, 100) einen am Maschinenbett (2) der Werkzeugmaschine (3) verfahrbaren Schlitten (21) aufweist, an dem der Lünettenträger (8) befestigt ist.

3. Lünette nach Anspruch 2, **dadurch gekennzeichnet, dass** sich die Baugruppe (17, 29) auf der dem Maschinenbett (2) zugewandten Seite der Lünette (1, 100) befindet.

4. Lünette nach einem der Ansprüche 1 bis 3, **dadurch gekennzeichnet, dass** das Stützelement (9, 10, 11) je eine Rolle (12) oder Schale (28) aufweist.

5. Lünette nach einem der Ansprüche 1 bis 4, **dadurch gekennzeichnet, dass** ein Hydraulikzylinder (22) das hydraulische Stellglied (15) ausbildet.

6. Lünette nach Anspruch 5, **dadurch gekennzeichnet, dass** das erste Stützglied (7) als Pinole ausgeführt ist, die in einem Zylinderelement (23) des Hydraulikzylinders (22) endet.

7. Lünette nach einem der Ansprüche 1 bis 6, **dadurch gekennzeichnet, dass** das erste Stützglied (7) einen zweiseitigen Hebel (30) aufweist, dessen erster Hebelarm (31) mit dem hydraulischen Stellglied (15) verbunden ist.

8. Lünette nach Anspruch 7, **dadurch gekennzeichnet, dass** der Hebel (30) als Winkelhebel ausgeführt ist.

9. Lünette nach Anspruch 7 oder 8, **dadurch gekennzeichnet, dass** das Stützelement (11) mit dem zweiten Hebelarm (32) des Hebels (30) über eine lösbare kraft- und/oder formschlüssige Verbindung (33) fest verbunden ist.

10. Lünette nach einem der Ansprüche 1 bis 9, **dadurch gekennzeichnet, dass** die Baugruppe (17, 29) eine Klemmeinrichtung (26) zur Fixierung der relativen Verstelllage deren Stützglieds (7) zum Werkstuck (4) aufweist.

11. Lünette nach einem der Ansprüche 1 bis 10, **dadurch gekennzeichnet, dass** die Kupplung (16) gegenüber dem Stützelement (9) eines zweiten seitlichen Stützgliedes (5) niedriger angeordnet ist, das dem hydraulischen Stützglied (7) gegenüberliegt.

12. Lünette nach einem der Ansprüche 1 bis 11, **dadurch gekennzeichnet, dass** am Lünettenträger (8) zwei das Werkstück (4) seitlich abstützende Stützglieder (5, 7), die sich gegenüberliegen, und ein das Werkstück (4) unten abstützendes Stützglied (6) befestigt sind.

## Claims

1. Steady rest for supporting a workpiece (4) of a machine tool (3), having a steady rest carrier (8) for preferentially mounting on the machine bed (2) of the machine tool (3), having at least one hydraulic actuator (15) and having a plurality of supporting members (5, 6, 7) fastened to the steady rest carrier (8), which supporting members (5, 6, 7) end in supporting elements (9, 10, 11) arranged angularly offset with respect to one another for abutment against the workpiece (4) and of which a first supporting member (7), which supports the workpiece (4) laterally with its supporting element (11), is mounted on the steady rest carrier (8) so as to be adjustable relative to the workpiece (4) by means of the hydraulic actuator (15), wherein the steady rest (1, 100) having a coupling (16) and an assembly (17, 29) with the first support member (7) and with the hydraulic actuator (15) which can be adjusted thereby, wherein this assembly (17, 29) being connected exchangeable via the coupling (16) to the steady rest carrier (8), **characterized in that** the operating direction (18, 35) of the first supporting member (7) with hydraulically actuatable actuator (15) is opposed to an operating direction (20, 38) by another supporting member (5, 6) or a plurality of other supporting members (5 and 6) by exclusively mechanically and/or electrically actuatable actuator (13, 14) or actuators (13 and 14).

2. Steady rest according to claim 1, **characterised in that** the steady rest (1, 100) has a slot (21) which can be moved on the machine bed (2) of the machine tool (3) and to which the steady rest carrier (8) is fastened.

3. Steady rest according to claim 2, **characterized in that** the building group (17, 29) is located on the side of the steady rest (1, 100) facing the machine bed (2).

4. Steady rest according to one of claims 1 to 3, **characterized in that** the supporting element (9, 10, 11) each has a roller (12) or shell (28).

5. Steady rest according to one of claims 1 to 4, **characterized in that** a hydraulic cylinder (22) forms the hydraulic actuator (15).

6. Steady rest according to claim 5, **characterized in that** the first supporting member (7) is designed as a sleeve which terminates in a cylinder element (23) of the hydraulic cylinder (22).

7. Steady rest according to one of claims 1 to 6, **characterized in that** the first support member (7) has a two-sided lever (30), the first lever arm (31) of which is connected to the hydraulic actuator (15).

8. Steady rest according to claim 7, **characterized in that** the lever (30) is designed as an angle lever.

9. Steady rest according to claim 7 or 8, **characterized in that** the support element (11) is firmly connected to the second lever arm (32) of the lever (30) via a detachable force-locking and/or positive-locking connection (33).

10. Steady rest according to one of the claims 1 to 9, **characterized in that** the assembly (17, 29) has a clamping device (26) for fixing the relative adjustment position of its supporting member (7) to the workpiece (4).

11. Steady rest according to one of claims 1 to 10, **characterized in that** the clutch (16) is arranged lower relative to the support element (9) of a second lateral support member (5) which is opposite the hydraulic support member (7).

12. Steady rest according to one of claims 1 to 11, **characterized in that** two supporting members (5, 7), which laterally support the workpiece (4) and lie opposite one another, and one supporting member (6), which supports the workpiece (4) at the bottom, are fastened to the steady rest carrier (8).

## Revendications

1. Support fixe pour supporter une pièce à usiner (4) d'une machine-outil (3), comportant un support de support de lunette (8) destiné à être monté de préférence sur le bâti (2) de la machine-outil (3), comportant au moins un actionneur hydraulique (15) et comportant plusieurs éléments porteurs (5, 6, 7) fixés au support de lunette (8), lesquels éléments porteurs (5, 6, 7) sont terminés en éléments porteurs (9, 10, 11) disposés angulairement décalés l'un par rapport à l'autre pour la butée par rapport à la pièce (4) et dont un premier élément de support (7), qui supporte latéralement la pièce (4) avec son élément de support (11), est monté sur le support de lunette (8) de manière à être réglable par rapport à la pièce (4) au moyen du vérin hydraulique (15), dans laquelle la lunette (1, 100) présente un accouplement (16) et un ensemble (17, 29) avec le premier élément de support (7) et avec l'actionneur hydraulique (15) réglable par celui-ci, cet ensemble (17, 29) étant relié au support de lunette (8) via l'accouplement (16), **caractérisé en ce que** le sens de fonctionnement (18, 35) du premier élément de support (7) avec un actionneur à commande hydraulique (15) est opposé à un sens de fonctionnement (20, 38) par un autre élément de support (5, 6) ou plusieurs autres éléments de support (5 et 6) par un actionneur (13, 14) ou des actionneurs (13 et 14) pouvant être actionnés exclusivement de manière mécanique et/ou électrique.

2. Support fixe selon la revendication 1, **caractérisé en ce que** le support de lunette (1, 100) présente une fente (21) mobile sur le bâti (2) de la machine-outil (3) et sur laquelle est fixé le support de lunette (8).

3. Support fixe selon la revendication 2, **caractérisé en ce que** le groupe de construction (17, 29) est situé sur le côté du support fixe (1, 100) tourné vers le banc de machine (2).

4. Support fixe selon l'une des revendications 1 à 3, **caractérisé en ce que** l'élément de support (9, 10, 11) présente chacun un rouleau (12) ou une coque (28).

5. Support fixe selon l'une des revendications 1 à 4, **caractérisé en ce qu'**un cylindre hydraulique (22) forme l'actionneur hydraulique (15).

6. Support fixe selon la revendication 5, **caractérisé en ce que** le premier élément de support (7) est réalisé sous la forme d'un manchon qui se termine dans un élément cylindrique (23) du vérin hydraulique (22).

7. Support fixe selon l'une des revendications 1 à 6, **caractérisé en ce que** le premier élément de support (7) présente un levier bilatéral (30), dont le premier bras de levier (31) est relié à l'actionneur hydraulique (15).

8. Support fixe selon la revendication 7, **caractérisé en ce que** le levier (30) est conçu comme levier angulaire.

9. Support fixe selon la revendication 7 ou 8, **caractérisé en ce que** l'élément d'appui (11) est relié solidement au deuxième bras de levier (32) du levier (30) par l'intermédiaire d'une liaison amovible à verrouillage forcé et/ou à verrouillage positif (33).

10. Support fixe selon l'une des revendications 1 à 9, **caractérisé en ce que** l'ensemble (17, 29) présente un dispositif de serrage (26) pour fixer la position de réglage relative de son élément de support (7) sur la pièce (4).

11. Support fixe selon l'une des revendications 1 à 10, **caractérisé en ce que** l'embrayage (16) est disposé plus bas par rapport à l'élément de support (9) d'un deuxième élément de support latéral (5) qui est opposé à l'élément de support hydraulique (7).

12. Support fixe selon l'une des revendications 1 à 11, **caractérisé en ce que** deux éléments de support (5, 7) qui supportent latéralement la pièce à usiner (4) et reposent l'un contre l'autre, et un élément de support (6) qui supporte la pièce à usiner (4) en bas, sont fixés sur le support (8).
